# EUROPÄISCHE PATENTSCHRIFT

(11) **EP 0 516 927 B1**
(45) Veröffentlichungstag und Bekanntmachung des Hinweises auf die Patenterteilung: **13.09.1995**
(21) Anmeldenummer: 92104632.2
(22) Anmeldetag: 18.03.1992
(51) Int. Cl.: G06K 7/10, G06K 7/12

(54) **Strichcode-System**
Barcode system
Système de code à bâtonnets

(30) Priorität: 19.03.1991 DE 4108916
(43) Veröffentlichungstag der Anmeldung: 09.12.1992
(73) Patentinhaber: DATA LOGIC OPTIK ELEKTRONIK GmbH, 73268 Erkenbrechtsweiler (DE)
(72) Erfinder: Lenk, Bernhard, W-7312 Kirchheim/Teck (DE)
(74) Vertreter: Gleiss & Grosse

(56) Entgegenhaltungen:
- EP-A- 0 101 939
- EP-A- 0 342 772
- WO-A-90/16043
- DE-A- 2 713 396
- US-A- 3 684 868
- US-A- 3 812 325
- JP ABSTRACT 63 024 379 (Tokyo Electric)
- Electro-Optical Systems Design, Vol 12, No. 6, June 1980, C.K. Cheng, "Laser Scanning Systems for Supermarket Automation"
- JP ABSTRACT 58 079 373 (Fuji Xerox)

## Beschreibung

Die Erfindung betrifft ein Strichcode-System mit auf je einem Hintergrund befindlichen Strichcodes und mit einer Strichcode-Lesevorrichtung, die eine Abtaststrahl-Erzeugungsvorrichtung sowie Lesemittel zum Lesen des jeweilen Strichcodes aufweist, dessen Informationsgehalt von unterschiedlich breiten Strichen und/oder Lücken gebildet ist, wobei die Abtaststrahl-Erzeugungsvorrichtung zeitlich nacheinander Strahlung unterschiedlicher Wellenlänge zur Erkennung der farblich wählbaren Striche beziehungsweise Lücken auf dem farblich wählbaren Hintergrund aussendet.

Strichcode-Lesesysteme beziehungsweise Lesevorrichtungen sind in unterschiedlichen Ausführungen bekannt. Beispielsweise geht aus der US-A-4 093 865 ein stationäres Strichcode-Lesesystem hervor. Auch sind manuell tragbare Strichcode-Lesesysteme im Handel erhältlich.

Den bekannten Strichcode-Lesevorrichtungen ist gemeinsam, daß sie auf Waren oder dergleichen angebrachte Strichcodes lesen können. Hierzu wird von einer Abtaststrahl-Erzeugungsvorrichtung ein Abtaststrahl über den Strichcode geführt und das Abtastergebnis von Lesemitteln aufgefangen, die eine Auswertung vornehmen.

Die in der Praxis eingesetzten Strichcodes bestehen aus einer Reihe von parallelen nebeneinander angeordneten Strichen konstanter oder unterschiedlicher Breiten und zwischen ihnen befindlichen Lücken ebenfalls konstanter oder unterschiedlicher Breiten. Die Wellenlänge des Abtaststrahls liegt im allgemeinen im sichtbaren Spektralbereich; es ist jedoch auch durchaus möglich, eine Wellenlänge zu wählen, die im Infrarot-Bereich liegt.

Bei den bekannten Strichcode-Lesevorrichtungen werden Strichcodes gelesen, die mit schwarzen Strichen auf weißem Grund im klassischen Sinne dargestellt sind. Überdies gibt es durch das EAN-System festgelegte Farbkombinationen, die auf der Basis von Rotlicht- beziehungsweise Infrarot-Lesevorrichtungen erfaßt werden können. Andere Farbkombinationen sind mit den bekannten Lesevorrichtungen nicht erfaßbar.

Aufgrund verschiedener Anforderungen des Marktes besteht jedoch der Wunsch, auch besondere Farbtöne als Strichcodefarben zu verwenden, die darüber hinaus nicht nur auf weißem Untergrund, sondern auch auf Untergründen mit wählbarer Hintergrundfarbe plaziert sind.

So ist beispielsweise aus der EP-A-0 101 939 ein Strichcodesystem bekannt, bei der Strichcodes von einer Strichcode-Lesevorrichtung abgetastet werden, die eine Abtaststrahl-Erzeugungsvorrichtung und zudem Lesemittel zum Lesen des Strichcodes aufweist.

Die in dem bekannten System enthaltene Abtaststrahl-Erzeugungsvorrichtung kann gleichzeitig oder zeitlich nacheinander Strahlung unterschiedlicher Wellenlänge zur Erkennung der farblich wählbaren Striche beziehungsweise Lücken auf dem farblich wählbaren Hintergrund aussenden. Bei dem bekannten Strichcodesystem ist es erforderlich, je nach der Farbe des Hintergrundes und der Barcodes unter zwei verschiedenfarbigen Strahlungen auszuwählen und diese dann mit Hilfe eines Schiebeschalters einzustellen.

Aus der Ausgabe der Fachzeitschrift Electro-Optical Systems Design vom Juni 1980 sind oszillierende Ablenkspiegel und verspiegelte, sich drehende Polygonwalzen bekannt, die in den Scannerkassen von Supermärkten Verwendung finden. Die hierbei verwendeten Abtaststrahlen weisen aber eine gleichbleibende Wellenlänge auf, so daß beim Abtasten von auf farbigem Hintergrund aufgebrachten Barcodes häufig Schwierigkeiten auftreten.

Der Erfindung liegt daher die Aufgabe zugrunde, eine weitere Möglichkeit eines Strichcode-Lesesystems der eingangs genannten Art anzugeben. Dabei sollen vorzugsweise auch mehrfarbige Strichcodes, insbesondere mehrfarbige Strichfarben und/oder mehrfarbige Hintergrundfarben, lesbar sein.

Diese Aufgabe wird erfindungsgemäß durch ein Strichcode-System gemäß Anspruch 1 gelöst.

Hierdurch ist es möglich, nicht nur eine ganz bestimmte Farbkombination von Strichfarbe und Hintergrundfarbe eines Strichcodes zu erfassen, sondern auch andersfarbige Strichcodes, nämlich Strichcode-Balken mit wählbarer Farbe oder auch wählbaren Farben auf einem Hintergrund mit wählbarer Farbe oder wählbaren Farben, zu lesen. Hierzu ist die Wellenlänge der Abtaststrahlen entsprechend auf die Farbkombination von Strichfarbe oder Strichfarben des Strichcodes und Hintergrundfarbe oder Hintergrundfarbe abgestimmt. Da zeitlich nacheinander Abtaststrahlen mit verschiedener Wellenlänge zur Verfügung stehen, können bei einem Lesevorgang unterschiedliche Farbkombinationen von Strich- und Hintergrundfarben eines oder verschiedener Strichcodes auf einem oder verschiedenen Produkten oder dergleichen gelesen werden, so daß sich das Einsatzgebiet der erfindungsgemäßen Strichcode-Lesevorrichtung wesentlich vergrößert. Es ist dadurch ermöglicht, ein- oder mehrfarbige Strichcodes auf verschiedenfarbigen Untergründen anzubringen, wobei keine Einschränkungen bei der Design-Gestaltung des Produkts beziehungsweise Gegenstands bestehen, da Farben gewählt werden können, die zum Beispiel produktspezifisch oder firmenspezifisch sind. Die mit Strichcode versehenen Produkte werden optisch gefälliger, da es aufgrund der Erfindung nicht mehr notwendig ist, die Farbe des Strichcodes und des Hintergrundes von der übrigen Farbgestaltung des Produktes deutlich abzusetzen. Vielmehr wird der Strichcode quasi farblich in das Produkt integriert und bleibt aufgrund der Erfindung trotzdem lesbar. Im übrigen ist es aufgrund der erfindungsgemäßen Ausgestaltung nicht mehr erforderlich, für den Strichcode eine weitere Druckfarbe (zum Beispiel schwarz) zu verwenden, da die Farbe des sonstigen Aufdrucks auch für den Strichcode verwendet werden kann. Dies stellt eine wesentliche Kostenersparnis im Bereich des Verpackungssektors dar. Es sei noch darauf hingewiesen, daß die Codeinformation durch die Breiten der Codebalken beziehungsweise Lücken zwischen den Balken, nicht aber durch die Farbe des Codes, geliefert wird.

Hierbei kann die Abtaststrahl-Erzeugungsvorrichtung mehrere Quellen verschiedener Wellenlänge aufweisen, die zyklisch nacheinander Strahlung aussenden.

Es besteht auch die Möglichkeit, daß die Abtaststrahl-Erzeugungsvorrichtung lediglich eine Quelle aufweist, die jedoch in der Lage ist, verschiedene Wellenlängen zyklisch nacheinander auszusenden. Es handelt sich dabei dann um eine sogenannte "durchstimmbare Quelle". Als Quelle ist hier stets eine Lichtquelle zu verstehen, wobei deren Licht im sichtbaren als auch im Infrarotbereich liegen kann.

Weiterhin ist vorgesehen, daß die Abtaststrahl-Erzeugungsvorrichtung eine Ablenkvorrichtung für die Strahlführung der ausgesendeten Abtaststrahlen aufweist. Diese Ablenkvorrichtung oszilliert, so daß die Abtaststrahlen einen Lesebereich überstreichen.

Schließlich ist vorgesehen, daß im Strahlengang ein Sensor angeordnet ist, der das Oszillationsintervall der Ablenkvorrichtung erfaßt und nach Ablauf mindestens eines Oszillationsintervalls die Wellenlänge der Abtaststrahl-Erzeugungsvorrichtung verändert. Insofern wird fortwährend nach Ablauf eines oder einer vorwählbaren Anzahl von Oszillationsintervallen ein Abtaststrahl mit sich jeweils ändernder Wellenlänge ausgesandt. Hierzu können aufeinanderfolgend verschiedene Abtaststrahl-Erzeugungsvorrichtungen mit jeweils einer dazugehörigen Wellenlänge automatisch aktiviert werden, oder es wird bei ein und derselben Abtaststrahl-Erzeugungsvorrichtung ihre Frequenz und somit die Wellenlänge des von ihr ausgesandten Abtaststrahls verändert. In dem letzten Falle handelt es sich um eine sogenannte durchstimmbare Quelle, bei der nach jedem beziehungsweise mehreren vorwählbaren Oszillationsintervallen eine neue Abstimmung auf eine andere Wellenlänge erfolgt.

Ferner weist die Strichcode-Lesevorrichtung einen Empfänger auf, der den Lesemitteln angehört und dem Lesevorgang der vom Strichcode und dem Untergrund reflektierten Strahlung dient.

Die Ablenkvorrichtung kann bevorzugt als oszillierender Ablenkspiegel ausgebildet sein. Hierzu ist der Spiegel mit einem entsprechenden Antrieb für die Oszillationsbewegung versehen.

Alternativ ist es auch möglich, als Ablenkvorrichtung eine verspiegelte, sich drehende Polygonwalze vorzusehen. Die einzelnen ebenen Mantelflächen dieser Polygonwalze bewirken bei ihrer Drehung eine entsprechende Strahlführung der Abtaststrahlen, so daß ein bestimmter Lesebereich, in dem sich der Strichcode befindet, erfaßt wird.

Es sei erwähnt, daß die Abtaststrahl-Erzeugungsvorrichtung als Laseranordnung ausgebildet sein kann.

Die Erfindung wird anhand der Figuren näher erläutert und zwar zeigt
- Figur 1: eine Strichcode-Lesevorrichtung, die das Verständnis der Erfindung erleichtern soll,
- Figur 2: eine weitere Strichcode-Lesevorrichtung, die ebenfalls das Verständnis der Erfindung erleichtern soll,
- Figur 3: eine Strichcode-Lesevorrichtung nach einem ersten Ausführungsbeispiel,
- Figur 4: eine Strichcode-Lesevorrichtung nach einem weiteren Ausführungsbeispiel.

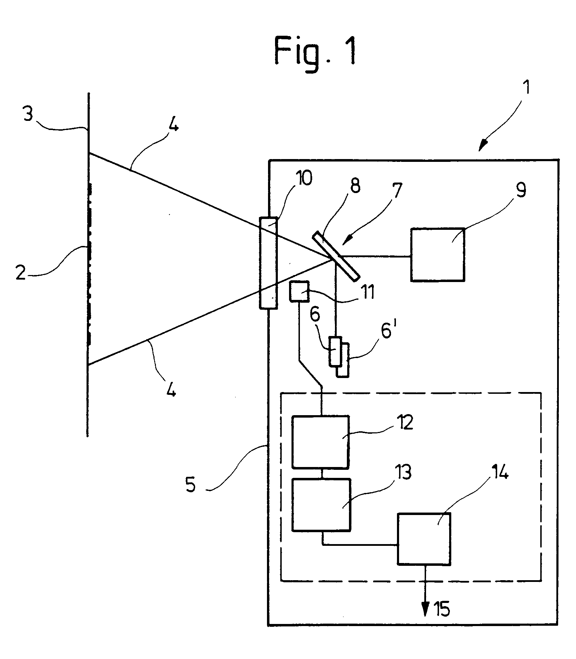

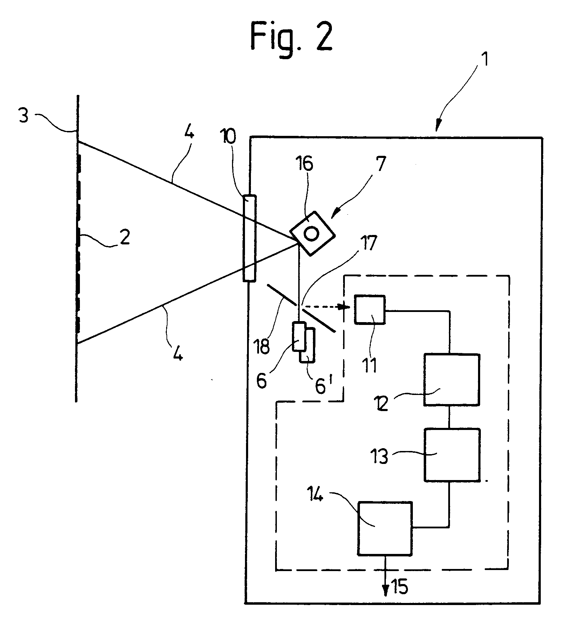

Zunächst werden die in Figuren 1, 2 gezeigten Beispiele von Strichcode-Lesevorrichtungen erläutert, um das Verständnis der erfindungsgemäßen Ausführungsbeispiele zu erleichtern.

Die Figur 1 zeigt ein Beispiel einer Strichcode-Lesevorrichtung 1, die der Erfassung eines Strichcodes 2 dient, der sich auf einem Untergrund 3 befindet. Mit den Linien 4 sind die Grenzen des Lesebereichs der Strichcode-Lesevorrichtung 1 gekennzeichnet.

In einem Gehäuse 5 der Strichcode-Lesevorrichtung 1 sind mehrere Abtaststrahl-Erzeugungsvorrichtungen 6, 6′ usw. untergebracht, die die von ihnen erzeugte Strahlung auf eine Ablenkvorrichtung 7 werfen, die die Abtaststrahlen umlenken und über die Breite des Erfassungsbereichs/Lesebereichs auffächern. In der Figur 1 sind lediglich zwei Abtaststrahl-Erzeugungsvorrichtungen 6 beziehungsweise 6′ dargestellt. Jede Abtaststrahl-Erzeugungsvorrichtung 6 beziehungsweise 6′ usw. unterscheidet sich von einer anderen Abtaststrahl-Erzeugungsvorrichtung durch die Wellenlänge der ausgesendeten Abtaststrahlen, so daß der Strichcode 2 gleichzeitig oder nacheinander mit einer Vielzahl verschiedener Wellenlängen von Abtaststrahlen beaufschlagt wird. Die Ablenkvorrichtung 7 weist einen Ablenkspiegel 8 auf, der -für eine Oszillationsbewegung- mit einem Antrieb 9 versehen ist. Durch die Oszillationsbewegung des Ablenkspiegels 8 wird jeder Abtaststrahl entsprechend dem durch die Linien 4 begrenzten Lesebereich aufgefächert. Vorzugsweise passieren die Strahlenfächer ein optisches System 10.

Die vom Strichcode 2 und dem Untergrund 3 zurückgeworfene Strahlung wird von einem Empfänger 11 erfaßt, der das empfangene Signal über eine Impulsformerstufe 12 einem Dekoder 13 zuleitet. Am Ausgang des Dekoders 13 ist eine Schnittstelle 14 angeschlossen, die zu einer Auswerteeinheit 15 führt. Die Auswerteeinheit 15 analysiert den Informationsinhalt des Strichcodes 2.

Da die einzelnen Abtaststrahl-Erzeugungsvorrichtungen 6, 6′ usw. jeweils eine unterschiedliche Wellenlänge aussenden, ist es möglich, entsprechende Strichcodefarben und/oder Hintergrundfarben zu erfassen, so daß aufgrund der Vielzahl der zur Verfügung stehenden Wellenlängen Codes mit entsprechenden Farben und/oder verschiedenfarbige Codes erfaßbar sind.

Die Figur 2 zeigt ein weiteres Vorrichtungsbeispiel, das weitgehend dem Vorrichtungsbeispiel der Figur 1 entspricht. Es soll hier nur auf die Unterschiede zum Vorrichtungsbeispiel der Figur 1 eingegangen werden. Diese Unterschiede bestehen darin, daß anstelle des oszillierenden Ablenkspiegels 8 eine verspiegelte, sich drehende Polygonwalze 16 vorgesehen ist. Ferner passieren die von den Abtaststrahl-Erzeugungsvorrichtungen 6, 6′ usw. kommenden, gebündelten Abtaststrahlen Durchbrüche 17 eines Spiegels 18, der zwischen den einzelnen Abtaststrahl-Erzeugungsvorrichtungen 6, 6′ und der Polygonwalze 16 angeordnet ist. Er dient dazu, die reflektierte, von der Polygonwalze 16 kommende Strahlung umzulenken, um sie dem Empfänger 11 zuzuleiten.

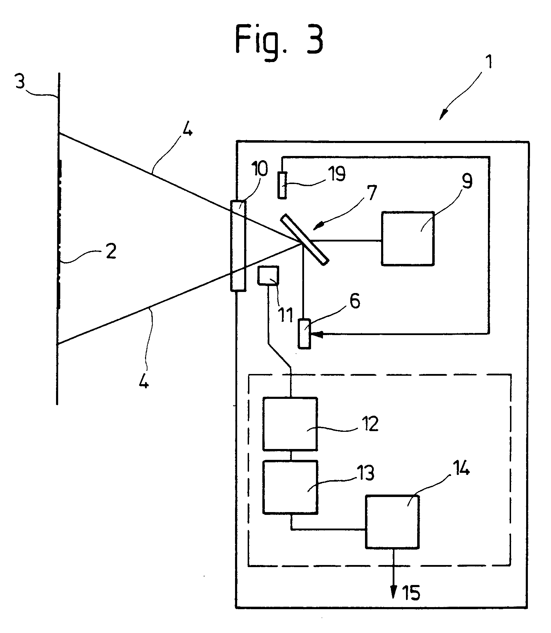

Die Figur 3 zeigt ein erstes Ausführungsbeispiel, das sich von der Vorrichtung der Figur 1 dadurch unterscheidet, daß nur eine Abtaststrahl-Erzeugungsvorrichtung 6 vorgesehen ist, die von einem Sensor 19 angesteuert wird. Der Sensor 19 registriert das Oszillationsintervall der Ablenkvorrichtung 7 und veranlaßt nach einem oder einer vorgebbaren Anzahl von Oszillationsintervallen, daß sich die Wellenlänge der ausgesandten Strahlung der Abtaststrahl-Erzeugungsvorrichtung 6 ändert. Mithin handelt es sich bei diesem Ausführungsbeispiel um eine durchstimmbare Quelle, das heißt, durch entsprechende Ansteuerung läßt sich die Wellenlänge der ausgesandten Strahlung stufenweise oder kontinuierlich verändern. Insofern ist es möglich, entsprechende Strichcodefarben beziehungsweise Hintergrundfarben des Strichcodes 2 zu erfassen.

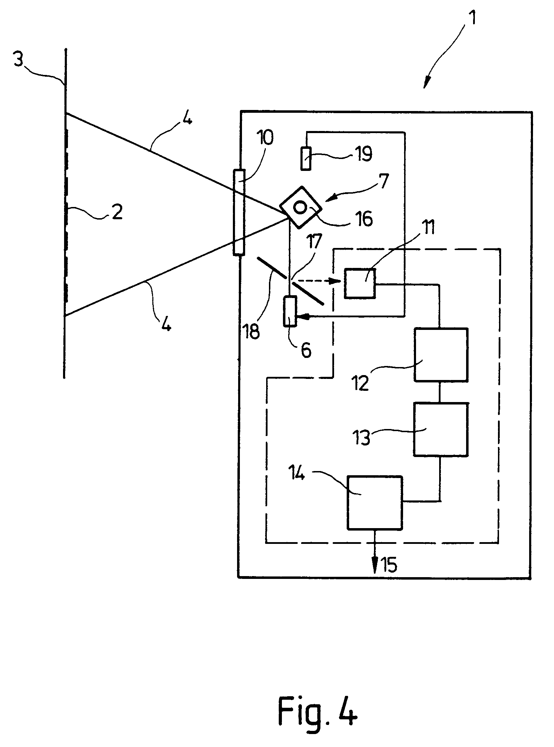

Die Figur 4 zeigt ein weiteres Ausführungsbeispiel einer erfindungsgemäßen Strichcode-Lesevorrichtung, die sich gegenüber der Vorrichtung der Figur 2 darin unterscheidet, daß sie ebenfalls ein Sensor 19 aufweist, um die durchstimmbare Abtaststrahl-Erzeugungsvorrichtung 6 im Rhythmus des Oszillationsintervalls zur Abgabe unterschiedlicher Wellenlänge ansteuern zu können.

Für die sichere Lesbarkeit des Strichcodes 2 ist es selbstverständlich erforderlich, daß ein hinreichender Kontrastunterschied zwischen der Strichfarbe und der Hintergrundfarbe vorliegt. Dabei ist es möglich, daß die Striche einen größeren Absorbtionsgrad der Strahlung im vergleich zu den Lücken aufweisen. Alternativ ist jedoch auch eine Inverscodedarstellung denkbar, bei denen die Striche ein geringeres Absorbtionsvermögen als die Lücken besitzen. Beide Varianten sind jedoch geeignet, um den Strichcode zu erfassen.

Die erfindungsgemäße Strichcode-Lesevorrichtung kann als Kompaktgerät oder aber auch als mehrere getrennte Baueinheiten ausgebildet sein, die miteinander durch Kabel verbunden werden. Sie kann als stationäre Anordnung oder aber auch als manuell tragbare Anordnung ausgebildet sein. Im letzteren Falle ist es möglich, einen manuell tragbaren Lesekopf vorzusehen, der gegebenenfalls auch die Auswerteschaltung mit enthält und der über ein elektrisches Kabel mit einer stationären Einheit verbindbar ist.

Bei einer durchstimmbaren Abtaststrahl-Erzeugungsvorrichtung wird ein Empfänger eingesetzt, der zum einen die spektrale Empfindlichkeit der Variation des durchstimmbaren Senders besitzt beziehungsweise zum anderen die Umschaltung eines Empfangselements in Verbindung mit der Synchronisation der Durchstimmung auf die jeweilige Empfindlichkeit (Wellenlänge) ermöglicht.

## Patentansprüche

1. Strichcode-System mit auf je einem Hintergrund (3) befindlichen Strichcodes (2) und mit einer Strichcode-Lesevorrichtung (1), die eine Abtaststrahl-Erzeugüngsvorrichtung (6) sowie Lesemittel zum Lesen des jeweiligen Strichcodes (2) aufweist, dessen Informationsgehalt von unterschiedlich breiten Strichen und/oder Lücken gebildet ist, wobei die Abtaststrahl-Erzeugungsvorrichtung (6) zeitlich nacheinander Strahlung unterschiedlicher Wellenlänge zur Erkennung der farblich wählbaren Striche beziehungsweise Lücken auf dem farblich wählbaren Hintergrund (3) aussendet, **dadurch gekennzeichnet**, daß eine Ablenkvorrichtung (7) für eine Abtaststrahlung (20) vorgesehen ist und daß ein Sensor (19) das Oszillationsintervall der Ablenkvorrichtung (7) erfaßt und nach Ablauf mindestens eines Oszillationsintervalls die Wellenlänge der Abtaststrahl-Erzeugungsvorrichtung (6) verändert.

2. Strichcode-System nach Anspruch 1, **dadurch gekennzeichnet**, daß die Abtaststrahl-Erzeugungsvorrichtung (6) mehrere Quellen verschiedener Wellenlänge aufweist.

3. Strichcode-System nach Anspruch 1 oder 2, **gekennzeichnet durch** einen Empfänger (11) für den Lesevorgang der reflektierten Strahlung.

4. Strichcode-System nach einem der vorhergehenden Ansprüche, **dadurch gekennzeichnet**, daß die Ablenkvorrichtung (7) als oszillierender Ablenkspiegel (8) ausgebildet ist.

5. Strichcode-System nach einem der vorhergehenden Ansprüche, **dadurch gekennzeichnet**, daß die Ablenkvorrichtung (7) als eine verspiegelte, sich drehende Polygonwalze (16) ausgebildet ist.

6. Strichcode-System nach einem der vorhergehenden Ansprüche, **dadurch gekennzeichnet**, daß die Abtaststrahl-Erzeugungsvorrichtung (6) als durchstimmbare Quelle ausgebildet ist und daß nach jedem Oszillationsintervall eine neue Abstimmung auf eine andere Wellenlänge erfolgt.

7. Strichcode-System nach einem der vorhergehenden Ansprüche, **dadurch gekennzeichnet**, daß die Abtaststrahl-Erzeugungsvorrichtung (6) als Laseranordnung ausgebildet ist.

## Claims

1. A barcode system comprising barcodes (2), each provided on a background (3), and a barcode reader (1) comprising a scanning-beam generator (6) and reading means for reading the respective barcode (2), the information content of which is formed by bars and/or gaps of differing width, wherein the scanning-beam generator (6) successively emits beams of different wave lengths for recognition of the bars and/or gaps, of optional colour, on the background (3), of optional colour, characterised in that a deflector (7) for a scanning beam (20) is provided and in that a sensor (19) detects the oscillation interval of the deflector (7) and, after at least one oscillation interval, changes the wave length of the scanning-beam generator (6).

2. A barcode system according to claim 1, characterised in that the scanning-beam generator (6) has a plurality of sources of differing wave length.

3. A barcode system according to claim 1 or 2, characterised by a receiver (11) for the operation of reading the reflected beam.

4. A barcode system according to any one of the preceding claims, characterised in that the deflector (7) is formed as an oscillating deflection mirror (8).

5. A barcode system according to any one of the preceding claims, characterised in that the deflector (7) is formed as a rotating, mirrored polygonal drum (16).

6. A barcode system according to any one of the preceding claims, characterised in that the scanning-beam generator (6) is formed as a variable source and in that, after each oscillation interval, readjustment to a different wave length takes place.

7. A barcode system according to any one of the preceding claims, characterised in that the scanning-beam generator (6) is formed as a laser arrangement.

## Revendications

1. Système à codes à barres comprenant des codes à barres (2) qui se trouvent chacun sur un fond (3), et comprenant un dispositif (1) de lecture des codes à barres, celui-ci comportant un dispositif (6) qui est destiné à engendrer un rayon de balayage, ainsi que des moyens de lecture pour lire le code à barres concerné (2), et son contenu en informations étant constitué par des barres et/ou par des intervalles de largeurs différentes, cependant que le dispositif (6) qui est destiné à engendrer un rayon de balayage émet successivement dans le temps un rayonnement de longueurs d'onde différentes pour que les barres ou les intervalles, respectivement, dont la couleur peut être choisie soient détectés sur le fond (3) dont la couleur peut être choisie, caractérisé par le fait qu'il est prévu un dispositif de déviation (7) qui est destiné à un rayonnement de balayage (20), et par le fait qu'un capteur (19) détermine la période du dispositif de déviation (7), et qu'il modifie la longueur d'onde du dispositif (6) qui est destiné à engendrer un rayon de balayage après qu'au moins une période s'est écoulée.

2. Système à codes à barres selon la revendication 1, caractérisé par le fait que le dispositif (6) qui est destiné à engendrer un rayon de balayage comporte plusieurs sources dont la longueur d'onde est différente.

3. Système à codes à barres selon la revendication 1 ou 2, caractérisé par un récepteur (11) qui est destiné au processus de lecture du rayonnement réfléchi.

4. Système à codes à barres selon l'une des revendications précédentes, caractérisé par le fait que le dispositif de déviation (7) est réalisé sous la forme d'un miroir de déviation oscillant (8).

5. Système à codes à barres selon l'une des revendications précédentes, caractérisé par le fait que le dispositif de déviation (7) est réalisé sous la forme d'un tambour polygonal tournant (16) qui est pourvu d'une couche réfléchissante.

6. Système à codes à barres selon l'une des revendications précédentes, caractérisé par le fait que le dispositif (6) qui est destiné à engendrer un rayon de balayage est réalisé sous la forme d'une source à fréquence variable, et par le fait qu'un nouvel accord sur une autre longueur d'onde a lieu après chaque période.

7. Système à codes à barres selon l'une des revendications précédentes, caractérisé par le fait que le dispositif (6) qui est destiné à engendrer un rayon de balayage est réalisé sous la forme d'un dispositif à laser.
